# FASCICULE DE BREVET EUROPEEN

(11) **EP 2 491 446 B1**
(45) Date de publication et mention de la délivrance du brevet: **30.01.2019**
(21) Numéro de dépôt: 10785139.6
(22) Date de dépôt: 19.10.2010
(51) Int. Cl.: G02B 6/32, G02B 6/38

(54) **DISPOSITIF DE CONNEXION DE FIBRES OPTIQUES**
LICHTWELLENLEITERSTECKVORRICHTUNG
OPTICAL FIBRE CONNECTION DEVICE

(30) Priorité: 19.10.2009 FR 0957315
(43) Date de publication de la demande: 29.08.2012
(73) Titulaire: Amphenol Socapex, 74300 Thyez (FR)
(72) Inventeur: DOIT, Stéphane, F-74400 Chamonix (FR); LAGRANGE, Laurent, F-78800 Saint-Pierre-en-Faucigny (FR)
(74) Mandataire: Intès, Didier Gérard André
(86) Numéro de dépôt international: PCT/FR2010/052222
(87) Numéro de publication internationale: WO 2011/048322

(56) Documents cités:
- EP-A1- 2 065 740
- WO-A1-2007/119036
- GB-A- 2 013 922
- GB-A- 2 263 557
- JP-A- 58 182 611
- US-A- 4 828 353
- US-A- 5 715 342
- US-A1- 2007 263 959

## Description

### Dispositif de connexion de fibres optiques

L'invention se rapporte à un dispositif de connexion de fibres optiques dit à faisceau expansé comprenant deux éléments de raccordement tubulaires, par exemple conformés pour s'insérer respectivement dans des cavités de deux boîtiers de connecteurs coopérant. Elle concerne plus particulièrement un perfectionnement permettant d'éviter toute détérioration de la liaison optique par encrassement et/ou usure des extrémités des fibres optiques.

On connaît des systèmes de connexion de fibres optiques destinés à s'insérer dans des cavités de boîtiers de connecteurs (formant par exemple une fiche et un socle) éventuellement pour remplacer des contacts électriques. De tels boîtiers de connecteurs peuvent par exemple être munis de moyens de verrouillage sécurisés, par bague et manchon filetés, baïonnette ou simplement par le contact de ces dits connecteurs.

Dans des conditions d'utilisation sévères (utilisation avec des équipements militaires, par exemple) le raccordement des fibres optiques peut se détériorer et rendre la liaison optique défectueuse. Par exemple, un contact classique fibre à fibre entre les deux parties du système de connexion peut manquer de fiabilité. Il se peut en effet que les extrémités des fibres optiques se salissent, ce qui est très difficile à vérifier vu le diamètre extrêmement faible (quelques microns) des fibres optiques utilisées. Il se peut surtout que les extrémités polies des fibres optiques s'usent et s'opacifient sous l'effet des vibrations. Ces défauts qui se traduisent par des pertes de transmission ne peuvent être réparés par l'utilisateur. Des contrôles et révisions fréquents, en laboratoire, sont nécessaires. Le document WO2007/119036 A1 décrit un dispositif de connexion selon le préambule de la revendication 1.

L'invention permet d'améliorer un système qui permet de résoudre tous ces problèmes.

Plus particulièrement, l'invention concerne en premier lieu un dispositif de connexion de fibres optiques comprenant deux éléments de raccordement, globalement tubulaires, conformés pour s'insérer respectivement dans des cavités de deux boîtiers de connecteurs coopérant, caractérisé en ce que chaque élément de raccordement comporte un barreau fibré comprenant axialement un tronçon de fibre optique, en ce que ce barreau est en contact, par une extrémité, avec l'extrémité d'une fibre optique correspondante et en ce que l'autre extrémité dudit barreau est située à une distance prédéterminée d'une lentille immobilisée dans ledit élément de raccordement et en ce que les deux éléments de raccordement comportent des embouts d'engagement coniques male et femelle, de même conicité, lesdites lentilles étant à distance voulue l'une de l'autre lorsque lesdits embouts coniques sont en contact.

Pour assurer le bon contact des embouts coniques, il est avantageux que l'un des éléments de raccordement porte extérieurement un ressort monté entre un épaulement dudit élément de raccordement et une bague coulissant sur celui-ci. La bague coopère avec des moyens de verrouillage dans le boîtier de connecteur correspondant. L'élément de raccordement peut donc se rétracter au montage en coulissant par rapport à la bague immobilisée et en comprimant le ressort. On obtient ainsi un contact sous sollicitation élastique desdits embouts d'engagement coniques.

Selon un mode de réalisation, chaque élément de raccordement accueille un insert traversé axialement par une fibre optique. Le rôle de cet insert est de centrer la fibre optique en amont du système, nombre de ces inserts sont connus dans le domaine de la fibre optique. Cet insert est généralement conformé pour s'engager en coulissement, axialement à une extrémité dudit élément de raccordement et comporte un barreau lui-même traversé axialement par ladite fibre optique et dont l'extrémité vient au contact d'une extrémité correspondante dudit barreau fibré pour établir un contact fibre à fibre entre ladite fibre optique traversant l'insert et le tronçon de fibre optique traversant ledit barreau fibré. Ce contact est maintenu sous sollicitation élastique par exemple grâce à un joint élastique annulaire intercalé entre l'élément de raccordement et l'insert. Cette liaison interne entre la fibre optique et le tronçon de fibre optique du barreau fibré est donc totalement stabilisée et protégée à l'intérieur même de l'élément de raccordement.

Avantageusement, l'extrémité du barreau fibré situé en regard de la lentille a une forme conique tronquée en biais. Par exemple, le cône est tronqué par un plan faisant un angle de 8° par rapport à sa base. Cette particularité évite le retour d'une partie du faisceau lumineux à travers la ligne optique jusqu'à la source émettrice et donc la perturbation de celle-ci.

Avantageusement, la lentille est constituée par une bille sphérique. On peut aussi utiliser une lentille du type plan convexe, c'est-à-dire cylindrique dont la face orientée vers l'extérieur comporte une calotte sphérique.

Les barreaux précités peuvent être à base de céramique compressée connue sous le nom de "zircone".

L'invention sera mieux comprise et d'autres avantages de celle-ci apparaîtront plus clairement à la lumière de la description qui va suivre d'un dispositif de connexion de fibres optiques conforme à son principe, donnée à titre d'exemple et faite en référence aux dessins annexés dans lesquels :
- la figure 1 est une vue en coupe longitudinale de l'un des deux éléments de raccordement du dispositif de connexion ;
- la figue 2 est une vue en coupe longitudinale de l'autre élément de raccordement ;
- la figure 3 est une vue de détail en coupe d'un insert adapté à l'extrémité de la fibre optique et venant se loger dans l'un ou l'autre des éléments de raccordement; et
- la figure 4 illustre l'accouplement des deux éléments de raccordement des figures 1 et 2 à l'intérieur des cavités de deux boîtiers de connecteurs coopérant.

Le dispositif de connexion de fibres optiques comprend ici principalement deux éléments de raccordement 11A, 11B, métalliques, creux, globalement tubulaires, c'est-à-dire présentant chacun un passage axial abritant les composants qui assurent le transfert du faisceau lumineux.

Chaque élément de raccordement 11A, 11B abrite une lentille 13 par exemple en verre et un barreau fibré 14, par exemple en "zircone", comportant axialement un tronçon de fibre optique 16, rectiligne, débouchant sur chacune de ses faces opposées. La lentille 13 a ici la forme d'une bille sphérique. Le barreau et la lentille sont immobilisés dans l'élément de raccordement 11A, 11B correspondant. Une extrémité 17 du barreau 14 est située à une distance prédéterminée de la lentille. Il ressort clairement des dessins que la lentille ainsi immobilisée près de l'orifice 19 du passage axial correspondant isole et protège l'extrémité 21 du tronçon de fibre optique qui lui fait face.

L'élément de raccordement 11A comporte extérieurement, du côté de la lentille correspondante, un embout d'engagement conique male 23 tandis que l'élément de raccordement 11B comporte intérieurement et du côté de la lentille 13 correspondante (dans le prolongement de celle-ci) un embout d'engagement conique femelle 25. Les deux embouts d'engagement conique sont de même conicité ou approchante pour un bon alignement de l'un par rapport à l'autre.

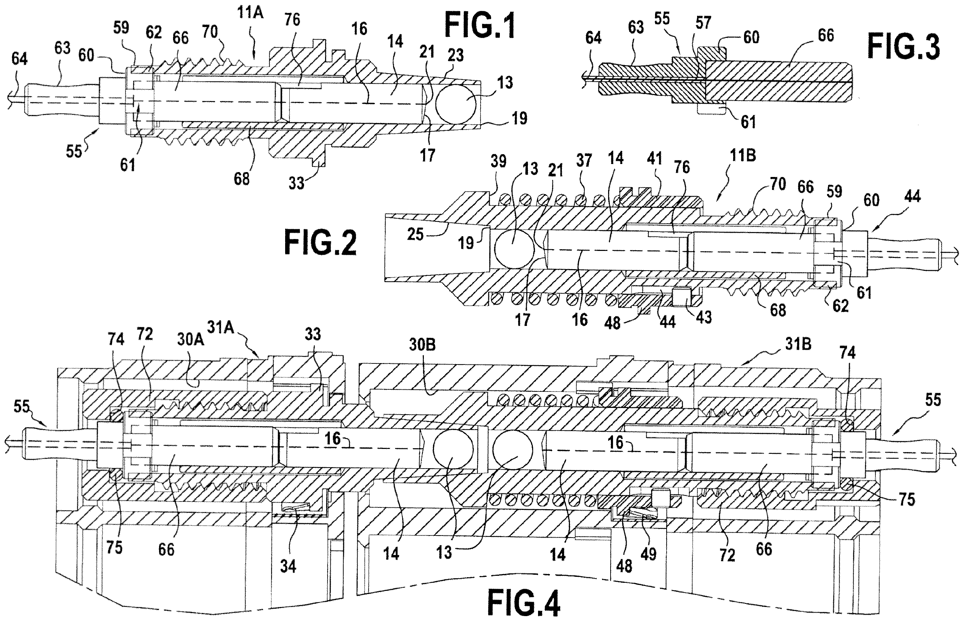

Comme on le voit sur l'exemple de la figure 4, les deux lentilles 13 sont à une distance prédéterminée l'une de l'autre lorsque les embouts coniques sont en contact. L'engagement conique assure un parfait alignement des deux éléments de raccordement.

Par exemple, dans le cas d'une lentille 13 sphérique et lorsque les deux éléments de raccordement 11A, 11B sont engagés avec leurs embouts coniques en contact, la distance séparant les centres des deux billes sphériques dite distance focale peut être le double de la distance séparant le centre d'une bille sphérique de l'extrémité 21 du tronçon de fibre optique 16, affleurant au centre de la face 17 du barreau 14 correspondant. Ainsi, le faisceau lumineux sortant du tronçon 14 est défocalisé par la première lentille qu'il rencontre, constant entre les deux lentilles et refocalisé par la seconde lentille sur l'extrémité de l'autre tronçon de fibre optique. Comme les deux lentilles 13 ne se touchent pas, tout risque d'usure consécutive à des chocs ou vibrations est éliminé. Si l'une des billes est encrassée dans sa partie voisine de l'orifice 19, elle peut facilement être nettoyée par un simple "coton tige" imbibé d'alcool et de l'air sec.

Les éléments de raccordement 11A, 11B sont ici conçus et conformés pour être montés dans des cavités 30A, 30B correspondantes de deux boîtiers de connecteurs 31A, 31B. L'élément de raccordement 11A comporte une collerette 33 qui coopère avec un élément de rétention 34 pour son immobilisation dans la cavité 30A. L'autre élément de raccordement 11B porte extérieurement un ressort 37 monté entre un épaulement 39 dudit élément de raccordement et une bague 41 coulissant sur ce même élément de raccordement. La bague coopère avec des moyens de verrouillage dans le boîtier de connecteur 31B correspondant permettant un contact sous sollicitation élastique desdits embouts d'engagement conique 23 et 25. Plus précisément, la bague 41 comporte un ergot 43 coulissant dans une rainure extérieure 44 de l'élément de raccordement. L'ergot 43 par l'intermédiaire de la rainure 44 et en raison des éléments géométriques des cavités 30A et 30B sert aussi à orienter les éléments de raccordement 11A et 11B entre eux. Cette rainure s'étend longitudinalement, définit la course de la bague 41. Le ressort 37 est monté avec une légère précontrainte de compression entre l'épaulement 39 et la bague 41. Cette dernière comporte aussi une collerette 48 qui coopère avec un élément de rétention 49 pour son immobilisation dans la cavité 30B. Ainsi, lorsque les deux éléments de raccordement 11A, 11B sont logés dans les cavités 30A, 30B des boîtiers 31A, 31B, respectivement, et que ces derniers sont raccordés (figure 4), l'élément de raccordement 11B recule dans la cavité 30B en comprimant d'avantage le ressort 37, ce qui assure le contact sous sollicitation élastique desdits embouts d'engagement coniques 23 et 25.

Chaque élément de raccordement 11A, 11B accueille, selon l'exemple un insert 55 (figure 3) traversé axialement par une fibre optique 57 et conformé pour s'engager en coulissement axial à une extrémité 59 dudit élément de raccordement opposée à celle qui comporte l'embout d'engagement conique. Les ergots 62 des éléments de raccordement 11A et 11B servent à orienter et immobiliser les inserts 55 avant montage des manchons filetés 72 en place. L'insert comporte par exemple à cet effet une collerette 60, à encoches 61 dans lesquelles s'engagent des ergots 62 définis à l'extrémité 59 de l'élément de raccordement opposée à celle où se trouve défini l'embout conique. L'insert 55 comporte une partie métallique comprenant ladite collerette 60 à encoches qui comprend un manchon 63 pouvant être déformé par sertissage pour l'immobilisation de la fibre optique. Cette dernière est protégée par une gaine 64 qui s'engage dans la partie métallique de l'insert jusqu'à un barreau 66 faisant saillie à l'autre extrémité de la partie métallique. Ce barreau est lui-même traversé axialement par la fibre optique 57 et l'extrémité de cette dernière vient affleurer à l'extrémité du barreau 66. Le barreau vient, par son extrémité, axialement au contact d'une extrémité correspondante dudit barreau fibré 14 pour établir un contact bout à bout entre ladite fibre optique 57 traversant l'insert et le tronçon de fibre optique 16 traversant le barreau fibré. Un manchon tubulaire 68 semi-rigide par exemple en Zircone est monté autour des deux barreaux 14, 66 pour les maintenir en alignement. Ce manchon tubulaire est fendu longitudinalement.

Chaque élément de raccordement comporte un filetage extérieur 70 sur lequel est vissé un manchon fileté 72 muni d'un épaulement annulaire d'extrémité 74 prenant appui sur l'insert pour maintenir les deux barreaux précités en contact, bout à bout. Un joint élastique 75 est, selon l'exemple, intercalé entre l'épaulement annulaire et l'insert.

De plus, l'extrémité du barreau fibré 14 située en regard de la lentille a une forme conique tronquée en biais pour éviter le retour d'une partie du faisceau lumineux à travers la ligne optique jusqu'à la source émettrice et donc la perturbation de celle-ci. Le tronçon de fibre optique 16 émerge et affleure néanmoins au centre de l'extrémité du barreau fibré.

Chaque barreau fibré comporte un méplat 76 permettant, grâce à un outillage spécifique, de bien maîtriser son orientation au montage, plus particulièrement pour bien maîtriser l'orientation de la troncature pratiquée à l'extrémité du barreau.

Après emboîtement axial des deux éléments de raccordement 11A, 11B, c'est-à-dire dans la situation illustrée à la figure 4, la transmission lumineuse par fibre optique dite « fibre à fibre » est remplacée par un système de défocalisation/focalisation, sans contact, permettant d'éviter tous les inconvénients mentionnés ci-dessus.

## Revendications

1. Dispositif de connexion de fibres optiques comprenant deux éléments de raccordement (11A, 11B), globalement tubulaires, conformés pour s'insérer respectivement dans des cavités de deux boîtiers de connecteurs (31A, 31B) coopérant, le dispositif de connexion tel que chaque élément de raccordement (11A, 11B) comporte un barreau fibré (14) comprenant axialement un tronçon de fibre optique (16), que ce barreau est en contact, par une extrémité avec l'extrémité d'une fibre optique (57) correspondante et que l'autre extrémité dudit barreau est située à une distance prédéterminée d'une lentille (13) immobilisée dans ledit élément de raccordement, le dispositif de connexion étant **caractérisé en ce que** les deux éléments de raccordement (11A, 11B) comportent des embouts d'engagement coniques (23, 25) male et femelle, de même conicité, lesdites lentilles étant à distance voulue l'une de l'autre lorsque lesdits embouts coniques sont en contact.

2. Dispositif de connexion selon la revendication 1, **caractérisé en ce que** l'un des éléments de raccordement (11B) porte extérieurement un ressort (37) monté entre un épaulement (39) dudit élément de raccordement et une bague (41) coulissant sur ledit élément de raccordement, ladite bague coopérant avec des moyens de verrouillage dans le boîtier de connecteur correspondant, permettant un contact sous sollicitation élastique desdits embouts d'engagement coniques.

3. Dispositif de connexion selon la revendication 1 ou 2, **caractérisé en ce que** chaque élément de raccordement (11A, 11B) comprend un insert (55) traversé axialement par une fibre optique (57) et conformé pour s'engager en coulissement axial à une extrémité dudit élément de raccordement, **en ce que** ledit insert comporte un barreau (66) lui-même traversé axialement par ladite fibre optique et dont l'extrémité vient axialement au contact d'une extrémité correspondante dudit barreau fibré (14) pour établir un contact de bout à bout entre ladite fibre optique traversant l'insert et ledit tronçon de fibre optique traversant ledit barreau fibré.

4. Dispositif de connexion selon la revendication 3, **caractérisé en ce qu'**un manchon tubulaire semi-rigide (68) est monté autour des deux barreaux (66) pour les maintenir en alignement.

5. Dispositif de connexion selon la revendication 4, **caractérisé en ce que** ledit manchon tubulaire (68) est fendu longitudinalement.

6. Dispositif selon l'une des revendications précédentes, **caractérisé en ce que** l'extrémité (17) du barreau fibré située en regard de ladite lentille a une forme conique tronquée en biais.

7. Dispositif selon la revendication 6, **caractérisé en ce que** ledit barreau fibré comporte un méplat (76) pour son orientation au montage.

8. Dispositif selon l'une des revendications 3 à 7, **caractérisé en ce que** chaque élément de raccordement (11A, 11B) comporte un filetage extérieur (70) sur lequel est vissé un manchon (72) fileté intérieurement muni d'un épaulement annulaire d'extrémité (74) prenant appui sur ledit insert (55) pour maintenir les deux barreaux précités en contact, bout à bout.

9. Dispositif selon la revendication 8, **caractérisé en ce qu'**un joint élastique (75) est intercalé entre ledit épaulement annulaire et ledit insert.

10. Dispositif selon l'une des revendications précédentes, **caractérisé en ce que** chaque lentille (13) a la forme d'une bille sphérique.

## Patentansprüche

1. Verbindungsvorrichtung für Lichtwellenleiter, umfassend zwei im Allgemeinen röhrenförmige Kopplungselemente (11A, 11B), die so ausgebildet sind, dass sie in jeweilige Hohlräume in zwei zusammenwirkenden Verbindergehäusen (31A, 31B) passen, wobei die Verbindungsvorrichtung so ist, dass jedes Kopplungselement (11A, 11B) einen Faserstab (14) umfasst, der axial ein Lichtwellenleitersegment (16) umfasst, dass dieser Stab über ein Ende mit dem Ende eines entsprechenden Lichtwellenleiters (57) in Kontakt ist, und dass das andere Ende des Stabs in einem vorbestimmten Abstand von einer Linse (13) angeordnet ist, die fest in dem Kopplungselement verankert ist, wobei die Verbindungsvorrichtung **dadurch gekennzeichnet ist, dass** die beiden Kopplungselemente (11A, 11B) Stecker- und Muffen-Eingriffsendstücke (23, 25) mit gleicher Konizität umfassen, wobei sich die Linsen in einem gewünschten Abstand voneinander befinden, wenn die konischen Endstücke in Kontakt sind.

2. Verbindungsvorrichtung nach Anspruch 1, **dadurch gekennzeichnet, dass** eines der Kopplungselemente (11B) außen eine Feder (37) trägt, die zwischen einem Ansatz (39) des Kopplungselements und einem Ring (41) angebracht ist, der auf dem Kopplungselement verschiebbar ist, wobei der Ring mit Verriegelungsmitteln in dem entsprechenden Verbindergehäuse zusammenwirkt, wodurch ein elastisch vorgespannter Kontakt der konischen Eingriffsendstücke ermöglicht wird.

3. Verbindungsvorrichtung nach Anspruch 1 oder 2, **dadurch gekennzeichnet, dass** jedes Kopplungselement (11A, 11B) einen Einsatz (55) umfasst, der axial durch einen Lichtwellenleiter (57) hindurchgehet und der eingerichtet ist, um an einem Ende des Kopplungselements axial gleitend einzugreifen, und dadurch, dass der Einsatz einen Stab (66) umfasst, durch den seinerseits ein Lichtwellenleiter axial hindurchgeht und dessen Ende mit einem entsprechenden Ende des Faserstabs (14) axial in Kontakt kommt, um einen Ende-zu-Ende-Kontakt zwischen dem Lichtwellenleiter, der durch den Einsatz hindurchgeht, und dem Lichtwellenleitersegment, das durch den Faserstab hindurchgeht, aufzubauen.

4. Verbindungsvorrichtung nach Anspruch 3, **dadurch gekennzeichnet, dass** eine halbstarre röhrenförmige Hülle (68) um die beiden Stäbe (66) herum angebracht ist, um sie ausgerichtet zu halten.

5. Verbindungsvorrichtung nach Anspruch 4, **dadurch gekennzeichnet, dass** die röhrenförmige Hülse (68) einen Längsschlitz aufweist.

6. Vorrichtung nach einem der vorhergehenden Ansprüche, **dadurch gekennzeichnet, dass** das Ende (17) des Faserstabs, das gegenüber der Linse liegt, eine abgeschrägte kegelstumpfförmige Form aufweist.

7. Vorrichtung nach Anspruch 6, **dadurch gekennzeichnet, dass** der Faserstab eine Abflachung (76) zur Ausrichtung beim Zusammensetzen umfasst.

8. Vorrichtung nach einem der Ansprüche 3 bis 7, **dadurch gekennzeichnet, dass** jedes Kopplungselement (11A, 11B) ein Außengewinde (70) umfasst, auf das eine Hülse (72) mit Innengewinde aufgeschraubt ist, die mit einem ringförmigen Endansatz (74) versehen ist, der gegen den Einsatz (55) anliegt, um die beiden oben genannten Stäbe Ende-zu-Ende in Kontakt zu halten.

9. Vorrichtung nach Anspruch 8, **dadurch gekennzeichnet, dass** eine elastische Dichtung (75) zwischen dem ringförmigen Ansatz und dem Einsatz angeordnet ist.

10. Vorrichtung nach einem der vorhergehenden Ansprüche, **dadurch gekennzeichnet, dass** jede Linse (13) die Form einer kugelförmigen Kugel aufweist.

## Claims

1. An optical fiber connection device comprising two generally tubular coupling elements (11A, 11B) that are shaped to be inserted in respective cavities in two cooperating connector housings (31A, 31B), the connection device such that each coupling element (11A, 11B) includes a fiber bar (14) axially containing an optical fiber segment (16), that the bar is in contact via one end with the end of a corresponding optical fiber (57), and that the other end of said bar is situated at a predetermined distance from a lens (13) held stationary in said coupling element, and **characterized in that** the coupling elements (11A, 11B) respectively include male and female conical engagement endpieces (23, 25) having the same cone angle, said lenses being at a desired distance apart from each other when said conical endpieces are in contact.

2. A connection device according to claim 1, **characterized in that** one of the coupling elements (11B) carries externally a spring (37) mounted between a shoulder (39) of said coupling element and a ring (41) slidable on said coupling element, said ring co-operating with locking means in the housing of the corresponding connector, enabling said conical engagement endpieces to be put into contact under elastic strain.

3. A connection device according to claim 1 or claim 2, **characterized in that** each coupling element (11A, 11B) includes an insert (55) having an optical fiber (57) passing axially therethrough and shaped to engage in axial sliding in one end of said coupling element, and **in that** said insert comprises a bar (66) having said optical fiber passing axially therethrough and having its end coming axially into contact with a corresponding end of said fiber bar (14) in order to establish end-to-end contact between said optical fiber passing through the insert and said optical fiber segment passing through said fiber bar.

4. A connection device according to claim 3, **characterized in that** a semirigid tubular sleeve (68) is mounted around the two bars (66) to hold them in alignment.

5. A connection device according to claim 4, **characterized in that** said tubular sleeve (68) is split longitudinally.

6. A device according to any preceding claim, **characterized in that** the end (17) of the fiber bar situated facing said lens has a slanting truncated conical shape.

7. A device according to claim 6, **characterized in that** said fiber bar includes a flat (76) for determining its orientation on assembly.

8. A device according to any one of claims 3 to 7, **characterized in that** each coupling element (11A, 11B) includes an external thread (70) on which an internally threaded sleeve (72) is screwed, the sleeve being provided with an annular end shoulder (74) bearing against said insert (55) to hold the above-mentioned two bars in end-to-end contact.

9. A device according to claim 8, **characterized in that** a resilient gasket (75) is interposed between said annular shoulder and said insert.

10. A device according to any preceding claim, **characterized in that** each lens (13) is in the form of a spherical bead.
